# EUROPEAN PATENT SPECIFICATION

(11) **EP 1 839 999 B1**
(45) Date of publication and mention of the grant of the patent: **13.06.2012**
(21) Application number: 07104080.2
(22) Date of filing: 14.03.2007
(51) Int. Cl.: B62D 15/02

(54) **Driving support method and driving support device**
Verfahren und Vorrichtung zur Fahrunterstützung
Procédé d'assistance à la conduite et dispositif d'assistance à la conduite

(30) Priority: 30.03.2006 JP 2006094065
(43) Date of publication of application: 03.10.2007
(73) Proprietor: AISIN AW CO., LTD., Anjo-shi, Aichi 444-1192 (JP)
(72) Inventor: Mori, Toshihiro, Okazaki-shi, Aichi Aichi 444-8564 (JP); Kubota, Tomoki, Okazaki-shi, Aichi Aichi 444-8564 (JP)
(74) Representative: Vossius & Partner

(56) References cited:
- EP-A- 1 022 903
- EP-A- 1 148 461
- DE-A1- 10 250 021
- GB-A- 2 357 743
- US-A1- 2001 026 317

## Description

The present invention relates to a driving support method and a driving support device.

Known conventional devices for supporting safe driving include a navigation apparatus that shows a background image of the vehicle's surroundings on a display. Such an apparatus inputs a picture signal from an onboard camera mounted at the vehicle rear end, and outputs a background image based on that picture signal to a display provided near the driver's seat.

JP-A-2002-373327 proposes an image processing device that collects image data input from an onboard camera when a parking operation is performed, and uses the collected image data to perform image processing so as to show an overhead image that surveys a surrounding area of the vehicle. In addition, the image processing device performs processing so as to rotate the image data collected in a memory in line with a current steering angle of the vehicle. By visually recognizing the overhead image, a driver can thus grasp a relative position/relative orientation of his or her own vehicle with respect to a target area of a parking space.

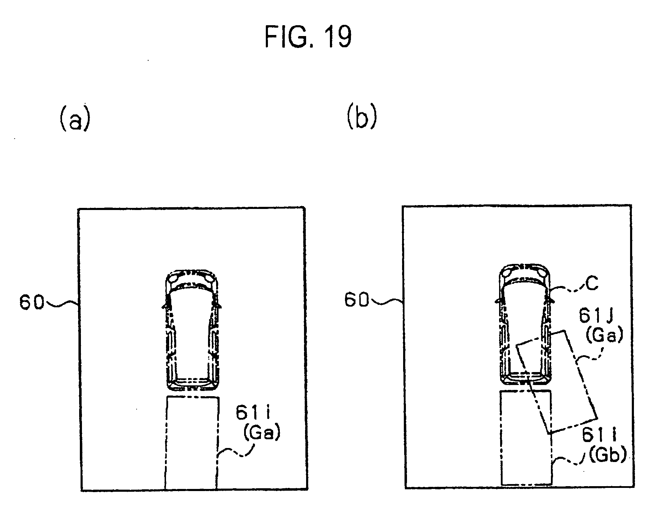

However, repeated use of the collected image data poses the risk of lowered image quality due to repeated processing for rotating the collected image data. In other words, to collect the image data, as FIG. 19A illustrates for example, obtained image data Ga is converted into an overhead view. This is then drawn on a pixel area 61i, which corresponds to the image data Ga converted into an overhead view and is among a synthesis memory area 60. When new image data Gb is obtained thereafter, as FIG. 19B illustrates, such image data is similarly converted into an overhead view, and used to overwrite the pixel area 61i that corresponds to the imaging range of the onboard camera. At this time, the previously obtained image data Ga is processed to rotate or shift in accordance with the current position and steering angle of the vehicle, and new pixel coordinates 61j are overlaid.

Repeatedly performing such processing to collect the image data means that older image data taken further back in the past is subjected more times to rotation processing. When image data is repeatedly processed to rotate in line with turning of the vehicle, although not necessarily according to the above synthesis procedure, filter and rotation processing errors or the like are accumulated. This leads to problems such as the following: a white line depicting a target parking space area shown as jagged, noise in the image, a drop in image quality as mentioned above, and an inability to accurately show the position of the driver's vehicle on the overhead image.

EP-A-1148461 discloses a driving operation assisting system which obtains the start position of the driving operation based on a prescribed movement pattern stored in a storage and selected by the user.

The present invention was devised in view of the foregoing problems, and it is an object of the present invention to provide a driving support method and a driving support device that are capable of showing an image with good image quality. This object is achieved with the features of the claims.

According to a first aspect of the present invention, recorded data to serve as a reference is preset, and image processing by converting image data into an overhead view is performed for the recorded data to newly generate recorded data. Such recorded data is then used to generate driving support image data, which is output to a display means. Therefore, the image processing is not repeated each time image data is input, and the number of times image processing is performed can be kept at a minimum. Consequently, it is possible to suppress reductions in image quality.

According to a second aspect of the present invention, when image data is input, an overhead view conversion is performed with respect to the image data based on a relative position from a reference position of the vehicle. The recorded image data is then stored in a corresponding area among a synthesis memory area. Such recorded image data is used to output driving support image data to a display means. Therefore, the geometric conversion is not repeated each time image data is input, and the number of times the geometric conversion is performed can be kept at a minimum. Consequently, it is possible to suppress reductions in image quality.

According to a third aspect of the present invention, the recorded data is generated by rotation processing using a first image processing means. Therefore, the number of times the rotation processing is performed can be kept at a minimum. Consequently, it is possible to suppress reductions in image quality such as white lines on the road surface becoming jagged.

According to a fourth aspect of the present invention, a new reference position is set if a relative position with respect to the reference position falls outside a predetermined range. Therefore, the limited memory area can be effectively utilized without increasing the memory area.

According to a fifth aspect of the present invention, a new reference position is set if the vehicle moves a predetermined distance from the reference position. Therefore, it is possible to avoid an increase in the memory area.

According to a sixth aspect of the present invention, the first image processing means performs a geometric conversion for the recorded data thus far accumulated to align the recorded data with the newly set reference position, if the new reference position is changed. Therefore, the recorded data already accumulated can be utilized instead of being discarded.

According to a seventh aspect of the present invention, when the driving support image data is generated, rotation processing is performed to align the driving support image with the position of the vehicle at such time. Therefore, it is possible to show an image that the driver can directly understand with ease.

According to an eighth aspect of the present invention, following conversion of the image data into an overhead view, such image data is stored as recorded data. Therefore, an overhead image that surveys the vehicle surroundings can be shown.

The invention is further described with reference to the drawings:
FIG 1 is a block diagram of a parking assist system according to an embodiment;
FIG. 2 is a plane view of a vehicle installed with the parking assist system;
FIG 3A is an explanatory drawing of image data, and FIG. 3B is an explanatory drawing of overhead image data;
FIG. 4 is an explanatory drawing of recorded image data;
FIG. 5 is an explanatory drawing of a processing procedure according to the present embodiment;
FIG 6 is an explanatory drawing of a processing procedure according to the present embodiment;
FIG. 7 is an explanatory drawing of the synthesis of recorded image data;
FIG. 8 is an explanatory drawing of the synthesis of recorded image data;
FIG. 9 is an explanatory drawing of the synthesis of recorded image data;
FIG. 10A is an explanatory drawing of trimming data before rotation processing, and FIG. 10B is an explanatory drawing of trimming data after rotation processing;
FIG. 11 is an explanatory drawing of a parking assist image;
FIG. 12 is an explanatory drawing of the synthesis of recorded image data;
FIG. 13 is an explanatory drawing of a parking assist image;
FIG.. 14 is an explanatory drawing of the synthesis of recorded image data;
FIG.. 15 is an explanatory drawing of the synthesis of recorded image data;
FIG.. 16 is an explanatory drawing of the synthesis of recorded image data;
FIG. 17 is an explanatory drawing of a parking assist image;
FIG. 18 is an explanatory drawing of a general overhead image; and
FIGS. 19A and 19B are explanatory drawings of the synthesis of conventional recorded image data.

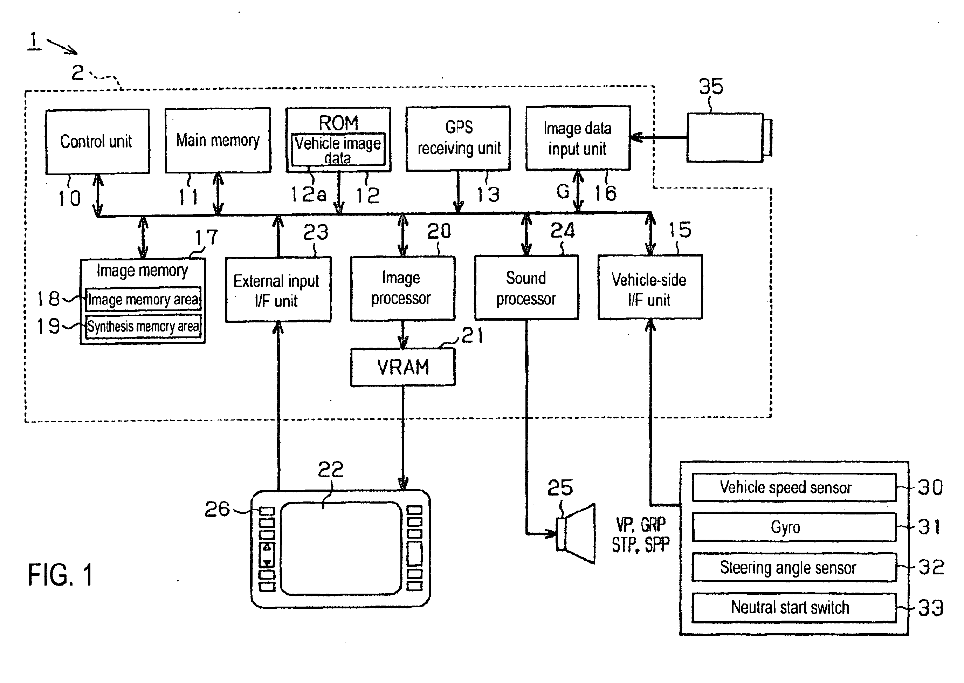

Hereinafter, an embodiment realizing the present invention will be described with reference to FIGS. 1 to 18. FIG. 1 is a block diagram that explains the structure of a parking assist system 1 mounted in an automobile.

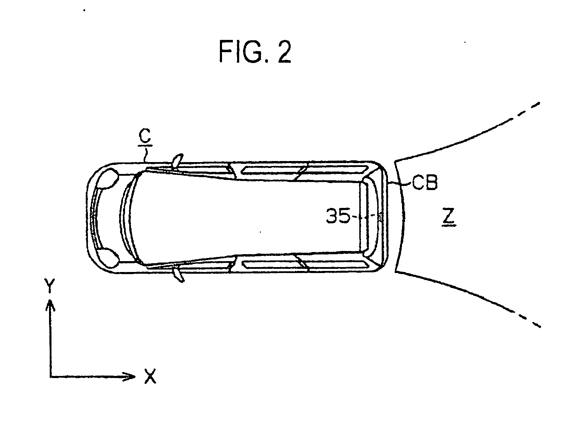

Referring to FIG. 1, the parking assist system 1 includes: a parking assist unit 2 acting as a driving support device; a display 22 acting as a display means that shows various screens; a speaker 25 that outputs warning sounds and speech guidance; and a back monitor camera (hereinafter simply referred to as a camera 35) acting as an imaging device. As FIG. 2 illustrates, the camera 35 is installed on a vehicle rear end CB, such as a back door of a vehicle C, such that an optical axis thereof faces diagonally downward. The camera 35 is a digital camera that images a color image. In addition, the camera 35 includes: an optical mechanism structured from a wide-angle lens, a mirror, and the like; and a CCD imaging element (neither of which is shown). The rear of the vehicle is designated as an imaging range Z.

Referring to FIG. 1 again, a control unit 10 acts as a position detecting means of the parking assist unit 2, and is provided with a computer (not shown). The control unit 10 performs a main control for processing in accordance with a driving support program stored in a ROM 12. A main memory 11 temporarily stores calculation results of the control unit 10, and also stores various variables, flags, and the like to assist parking.

Stored in the ROM 12 are driving support programs, as well as vehicle image data 12a for depicting the vehicle C installed with the parking assist system 1 on the display 22. The vehicle image data 12a are data for showing an image that surveys the vehicle C from above in the vertical direction.

In addition, the parking assist unit 2 includes a GPS receiving unit 13. Based on a signal from a GPS satellite that is received by the GPS receiving unit 13, the control unit 10 calculates absolute coordinates of the vehicle C installed with the parking assist system 1 using electronic navigation.

Furthermore, the parking assist unit 2 includes a vehicle-side interface unit (a vehicle-side I/F unit 15) that structures a detecting mechanism. The control unit 10 respectively inputs a vehicle speed pulse VP and an orientation detection signal GRP from a vehicle speed sensor 30 and a gyro 31 provided in the vehicle C, via the vehicle-side I/F unit 15. Based on the number of input pulses for the vehicle speed pulse VP, the control unit 10 calculates a movement amount of the vehicle C from a reference position. Moreover, the control unit 10 updates a variable stored in the main memory 11, i.e., a current orientation GR, based on the inputted orientation detection signal GRP.

Additionally, the control unit 10 inputs a steering sensor signal STP from a steering angle sensor 32, via the vehicle-side I/F unit 15. Based on the steering sensor signal STP, the control unit 10 updates a current steering angle STR of the vehicle C which is stored in the main memory 11. Also, the control unit 10 inputs a shift position signal SPP from a neutral start switch 33 of the vehicle C, via the vehicle-side I/F unit 15, and updates a variable stored in the main memory 11, i.e., a shift position SP.

The parking assist unit 2 also includes: an image data input unit 16 that acts as an image data input means; and an image processor 20 that acts as a reference position setting means, a first image processing means, a second image processing means, an output control means, and a third image processing means. The image data input unit 16 drivingly controls the camera 35 through the main control of the control unit 10, and inputs image data G. The image processor 20 performs image processing and the like for the image data G input from the camera 35.

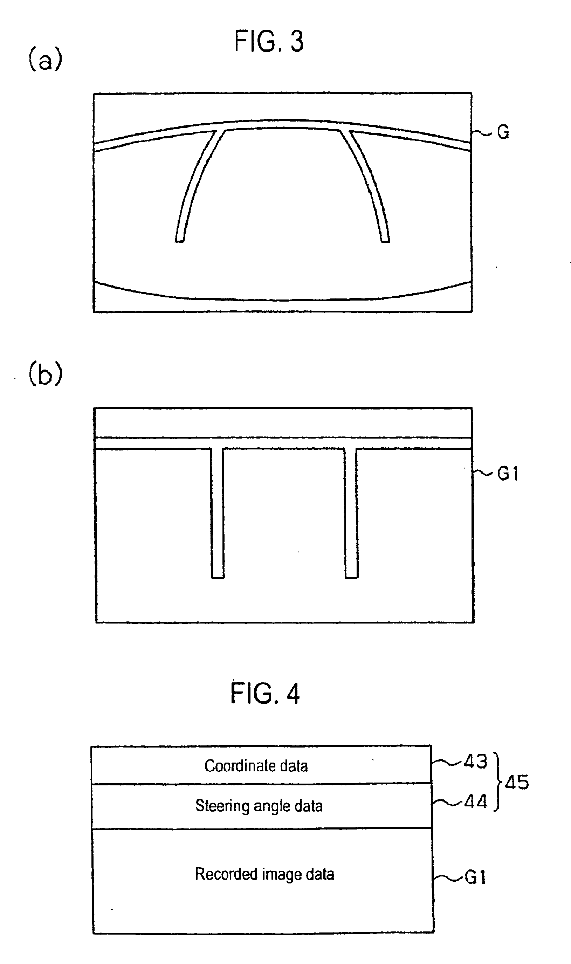

Once the vehicle C starts to back up during a parking operation, the control unit 10 captures the image data G, shown in a frame format in FIG. 3A, at a predetermined interval from the camera 35 via the image data input unit 16. The image processor 20 then converts the image data G into an overhead view (hereinafter referred to as an overhead view conversion) as illustrated in FIG. 3B, using a known method. This in turn generates recorded image data G1 that surveys the rear surroundings of the vehicle C from a viewpoint set as from above in the vertical direction.

Upon generating the recorded image data G1, the image processor 20 obtains the current position and orientation of the vehicle C via the control unit 10. As FIG. 4 illustrates, such data is associated with the recorded image data G1 as positional data 45, which is formed from coordinate data 43 and steering angle data 44. These are then stored in an image memory area 18 among an image memory 17 (see FIG 1) that acts as an image data storing means provided in the parking assist unit 2. Note that the coordinate data 43 and the steering angle data 44 may be attached to the recorded image data G1 as illustrated in FIG. 4, or a map formed from the coordinate data 43 and the steering angle data 44 may be linked to the recorded image data G 1 by a header or the like.

In addition, the image processor 20 compares the positional data 45 with a preset reference position. Based on a relative position thereof (relative data), the image processor 20 performs a geometric conversion (image processing) for the recorded image data G1. This is then written into and synthesized with an area corresponding to a synthesis memory area 19 (see FIG. 1) of the image memory 17. More specifically, the image processor 20 performs rotation processing (a rotational conversion) in accordance with the steering angle of the vehicle C, and performs shift processing (parallel translation) based on a relative distance.

Moreover, the image processor 20 performs processing to generate a parking assist screen in parallel with such processing. This processing uses predetermined recorded image data G1 from the synthesis memory area 19 and the latest image data G (hereinafter referred to as current image data G4) obtained from the camera 35. The processing generates synthesized data to show an overhead image of the vehicle surroundings, which includes current blind spots of the camera 35. The synthesized data is temporarily stored in a VRAM 21 (see FIG. 1), and output to the display 22 at a predetermined timing.

The display 22 on which various images are shown is a touch panel. Following an input operation by the user of the touch panel or operating switches 26 (see FIG. 1) provided adjacent to the display 22, an external input interface unit (hereinafter referred to as an external input I/F unit 23) of the parking assist unit 2 outputs an input signal to the control unit 10 in accordance with the input operation.

Referring to FIG. 1 again, the parking assist unit 2 includes a sound processor 24. The sound processor 24 includes a memory (not shown) that stores sound files and a digital/analog converter. Using the sound files, the sound processor 24 outputs speech guidance and warning sounds from a speaker 25 provided in the parking assist system 1.

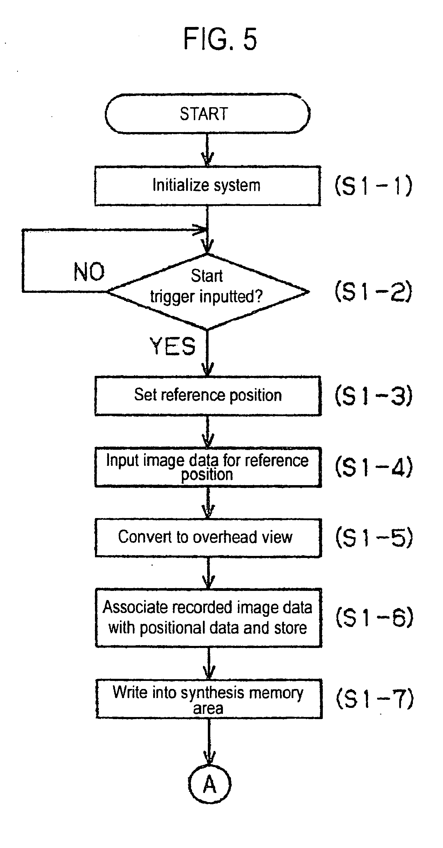

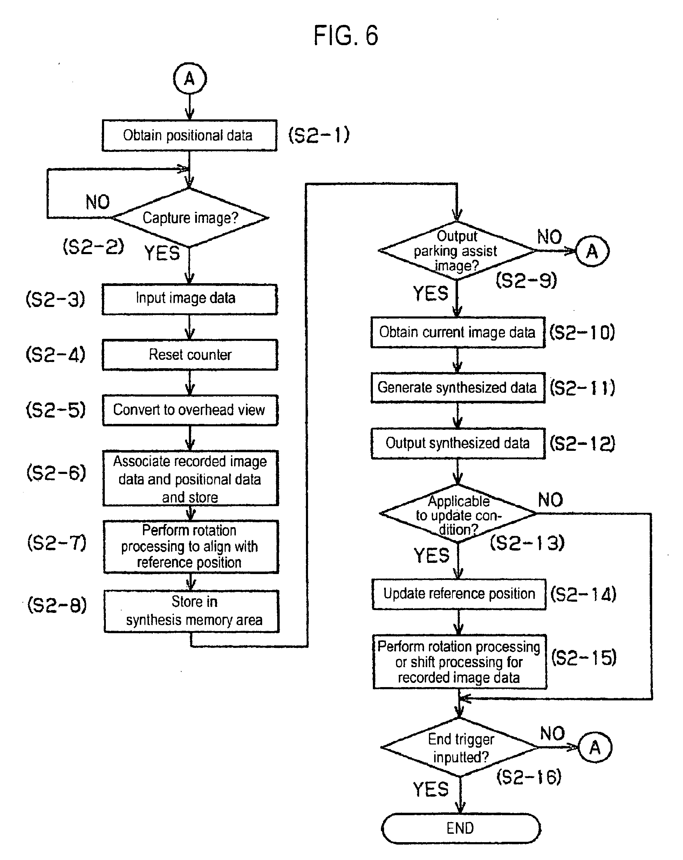

A processing procedure according to the present embodiment will be explained next with reference to FIGS. 5 and 6. Following the input of an ON signal from an ignition module (not shown) of the vehicle C, the control unit 10 first initializes the system by clearing the image memory 17 and the like, in accordance with a driving support program stored in the ROM 12 (step S1-1). The control unit 10 then waits for the input of a start trigger for driving support processing (step S1-2). In the present embodiment, the start trigger is the shift position signal SPP indicating reverse, which is output from the neutral start switch 33.

If the start trigger is input due to the vehicle C backing up (YES at step S1-2), then the control unit 10 sets the position of the vehicle C when the start trigger was input as a reference position S1 (step S1-3).

The control unit 10 controls the camera 35 via the image data input unit 16, and inputs the image data G taken at the reference position S1 (step S1-4). Following input of the image data G taken at the reference position S1, the image processor 20 performs an overhead view conversion of such image data G to generate the recorded image data G1 as shown in a frame format in FIG. 3B, using a known image processing method (step S1-5). After performing the overhead view conversion, the image processor 20 associates the coordinate data 43 and the steering angle data 44 which indicate the reference position S1, and the recorded image data G1 via the control unit 10, which are then stored in the image memory area 18 among the image memory 17 (step S1-6).

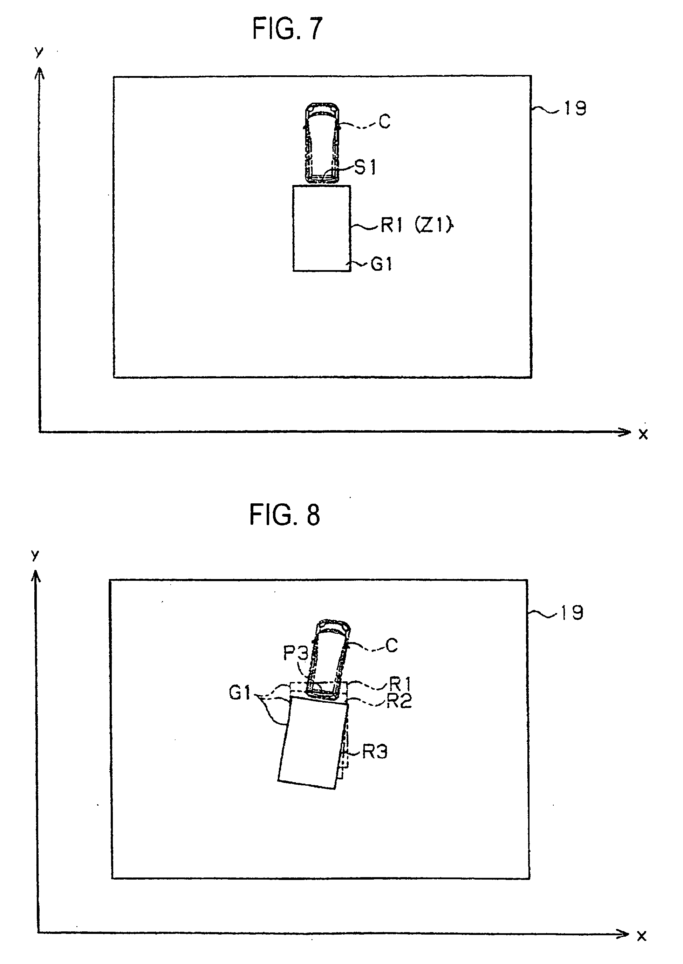

The image processor 20 also stores the recorded image data G1 for the reference position S1 in the synthesis memory area 19 among the image memory 17 (step S1-7). More specifically, as FIG. 7 illustrates, the recorded image data G1 is stored in a pixel area R1, which corresponds to an imaging range Z1 in the reference position S1 of the vehicle C and is among the synthesis memory area 19. Thus, the recorded image data G1 taken at the reference position S1 is written into the synthesis memory area 19 and synthesized. Thereafter, the procedure proceeds to processing shown in FIG. 6.

The processing procedure shown in FIG. 6 is a procedure for the second and subsequent storage and synthesis processing of the recorded image data G1. First, the control unit 10 obtains the positional data 45 based on the vehicle speed pulse VP and the steering sensor signal STP (step S2-1). The control unit 10 then judges whether a timing at which to capture an image is reached (step S2-2). In the present embodiment, the control unit 10 accumulates the number of input pulses of the vehicle speed pulses VP from the time point when the reference position S1 was set in a pulse counter stored in the main memory 11, and judges the image capture timing as the point when the accumulated number of pulses reaches a predetermined quantity. In other words, an image is captured every time the vehicle C backs up a predetermined distance D1, which may be several hundred millimeters, for example. In this case, a first capture position P1 (not shown) is behind the reference position S1 from the forward travel direction (i.e., in the backing up direction) at the predetermined distance D1. The control unit 10 judges the timing at which an image is captured as when the vehicle C reaches the first capture position P1 (YES at step S2-2), and the procedure proceeds to step S2-3. If the vehicle C has not yet reached the first capture position P1 behind the reference position S1 from the forward travel direction at the predetermined distance D1 (NO at step S2-2), then the control unit 10 continues to perform this judgment until it is reached.

At step S2-3, the control unit 10 inputs new image data G from the camera 35 via the image data input unit 16. Following input of the image data G, the control unit 10 resets a counter value of the pulse counter stored in the main memory 11, and returns it to an initial value (step S2-4). Also, the image processor 20 performs an overhead view conversion of the image data G to generate the recorded image data G1 (step S2-5). The positional data 45 formed from the coordinate data 43 and the steering angle data 44 are then associated with the recorded image data G1, and these are stored in the image memory 17 (step S2-6).

Subsequently, the image processor 20 performs rotation processing for the generated recorded image data G1 based on the relative position with respect to the reference position S1, using a known image processing method (step S2-7), and stores the recorded image data G1 subjected to the rotation processing in a corresponding pixel area among the synthesis memory area 19 (step S2-8). More specifically, the image processor 20 obtains the steering angle data 44 of the reference position S1, and compares that steering angle data 44 with the current steering angle 44. Rotation processing is then performed for the recorded image data G1 in line with the steering angle data 44 of the reference position S1. In addition, the image processor 20 compares the coordinate data 43 of the reference position S 1 with the current coordinate data 43. Pixel values of the recorded image data G1 subjected to rotation processing are then stored in a pixel area R2 corresponding to the synthesis memory area 19, as illustrated in FIG 8 If the pixel area R2 and the pixel area R1 of the recorded image data G1 taken at the reference position S1 overlap, then such overlapping portions are overwritten by the recorded image data G1 taken later.

Following storage of the recorded image data in the synthesis memory area 19, it is judged whether a timing at which to output the parking assist image is reached (step S2-9). In the present embodiment, this judgment is made based on whether a predetermined quantity of recorded image data G1 are stored within the synthesis memory area 19. However, the judgment may also be made based on whether the vehicle C has backed up a predetermined distance D2 from the reference position S1. In the present embodiment, the timing at which to show the parking assist image is designated as a time when four or more recorded image data G1 are stored. Thus, a judgment is made not to show the parking assist image at this time point as only two recorded image data G1 have been accumulated (NO at step S2-9), and the procedure returns to step S2-1.

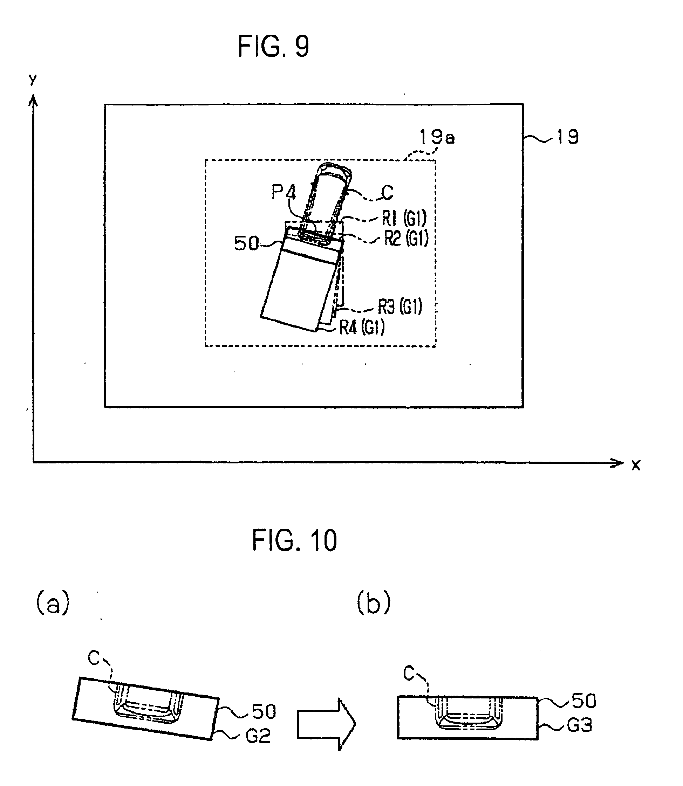

The above processing is further repeated twice (steps S2-2 to S2-9). Once four recorded image data G1 are stored in the synthesis memory area 19, as illustrated in FIG 9, then the image processor 20 judges that the timing at which to output the parking assist image has been reached (YES at step S2-9). At that time point, the most recently taken current image data G4 is obtained (step S2-10).

After the current image data G4 is obtained, the current image data G4 and the recorded image data G1 are used to generate synthesized data G6 as driving support image data (step S2-11). More specifically, as FIG. 9 illustrates, the image processor 20 trims a trimming range 50 corresponding to the current surroundings of the rear portion of the vehicle C from each recorded image data G1 written into the synthesis memory area 19. Trimmed data G2 as illustrated in FIG. 10A are thus generated. Moreover, the image orientation of the trimmed data G2 matches the direction of the steering angle for the reference position S1. Therefore, known rotation processing is performed to align the trimmed data G2 with the current steering angle, based on the steering sensor signal STP. Synthesis recorded data G3 as illustrated in FIG. 10B are thus generated. In addition, the synthesis recorded data G3 on an upper side among the display area of the display 22 and the current image data G4 on the lower side are joined in a continuous manner so as to generate synthesized data G6.

Following generation of the synthesized data G6, the image processor 20 temporarily stores the synthesized data G6 in the VRAM 21, and outputs it to the display 22 at a predetermined timing (step S2-12).

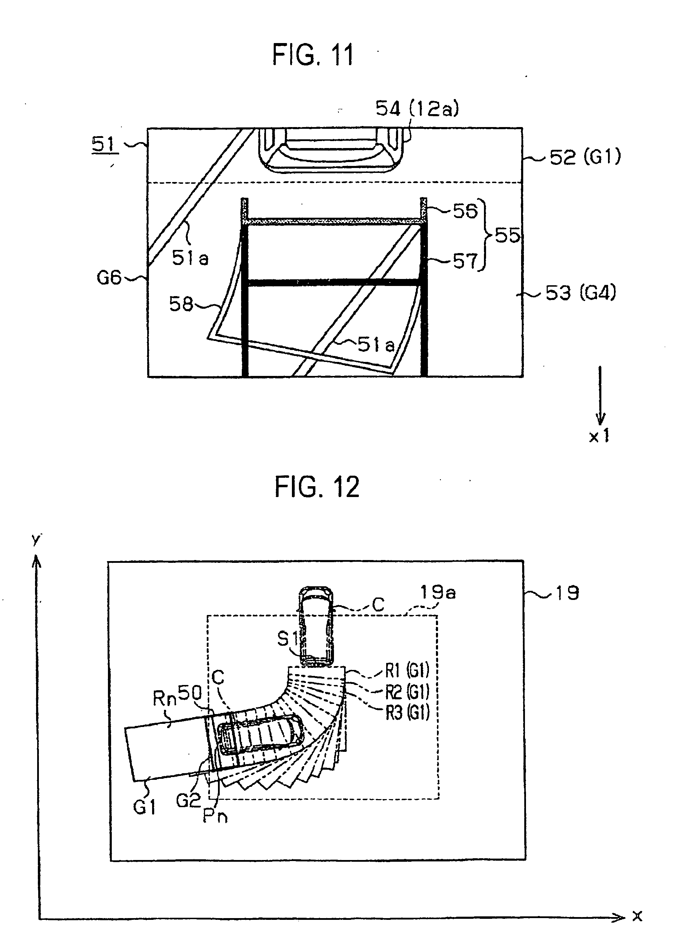

As a consequence, the display 22 shows a parking assist image 51 as illustrated in FIG. 11. Shown in the parking assist image 51 are: a recorded image 52 based on the recorded image data G1, and a current image 53 based on the current image data G4. The recorded image 52 is shown on the upper side of the screen, and shows a road surface or the like in the surroundings of and behind the rear portion of the vehicle C, which are currently in blind spots of the camera 35. In addition, the current image 53 is shown on the lower side of the screen, and is an image that reflects the current state of the vehicle's surroundings. In other words, the parking assist image 51 is shown such that the forward travel direction (backing up direction) of the vehicle C becomes a direction facing from the upper side toward the lower side of the display 22 (a direction x1 in FIG. 11).

Also, the image processor 20 overlaps a portion of a vehicle image 54 based on the vehicle image data 12a onto a position that corresponds to the current position of the vehicle C among the recorded image 52. The rear portion of the vehicle C is depicted by the vehicle image data 12a on the parking assist image 51 shown in FIG. 11. Thus, the driver can confirm the relative position and the relative direction between the vehicle C and a parking target area indicated by white lines 51a that are shown based on the recorded image 52 and the current image 53.

Furthermore, the image processor 20 superimposes a guide line 55 on the current image 53. The guide line 55 is formed from the following: a target line 56 that indicates a predetermined distance (e.g. 0.8 meters) rearward from the rear end CB of the vehicle C, a vehicle width extended line 57 that extends the width to behind the vehicle C, and a predicted trajectory line 58 that is depicted in accordance with the current steering angle.

Once the parking assist image 51 is shown, the control unit 10 judges whether a condition for updating (hereinafter referred to as an update condition) of the reference position S1 is applicable (step S2-13). In the present embodiment, the update condition is triggered when the pixel coordinates corresponding to the current position of the vehicle C among the synthesis memory area 19 fall outside a predetermined range 19a set in advance. Here, a fourth capture position P4 as illustrated in FIG. 9 is falls inside the predetermined range 19a. Therefore, it is judged that the update condition is not applicable (NO at step S2-9) and the procedure proceeds to step S2-16. At step S2-16, it is judged whether an end trigger has been input. The end trigger in the present embodiment is the shift position signal SPP indicating a shift position other than reverse. If it is judged that the end trigger has not been input (NO at step S2-16), then the procedure returns to step S2-1.

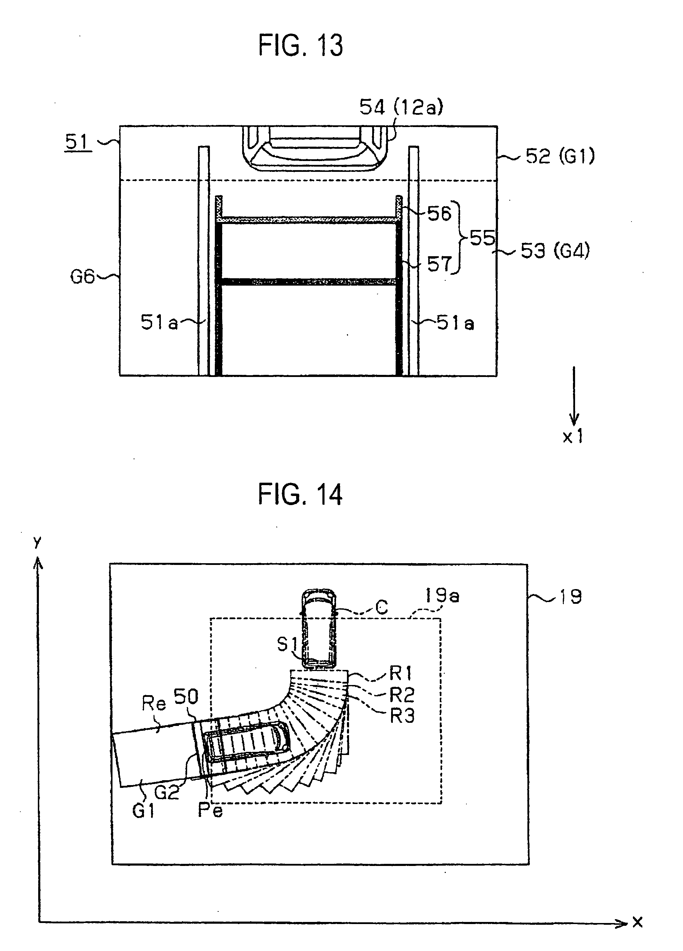

Upon returning to step S2-1, the control unit 10 and the image processor 20 repeat steps S2-1 to S2-13. As FIG. 12 illustrates, regardless of whether the synthesis memory area 19 is overwritten with a plurality of recorded image data G1 as the vehicle C approaches the parking target area, the initially set reference position S1 is maintained if the nth number of the Nth capture position Pn is included within the predetermined range 19a. At such time, at step S2-11, the trimming range 50 around the current position (the Nth capture position Pn) of the vehicle C is extracted, and the trimmed data G2 is rotationally converted to align with the current steering angle data 44, in order to generate the synthesized data G6. As a consequence, at step S2-12, the parking assist image 51 as illustrated in FIG. 13 is shown. By performing rotation processing to align the trimmed data G2 with the current steering angle, the forward travel direction (backing up direction) of the vehicle C becomes aligned with the vertical direction (the direction x1 in FIG. 13) of the display 22 in the parking assist image 51 as well.

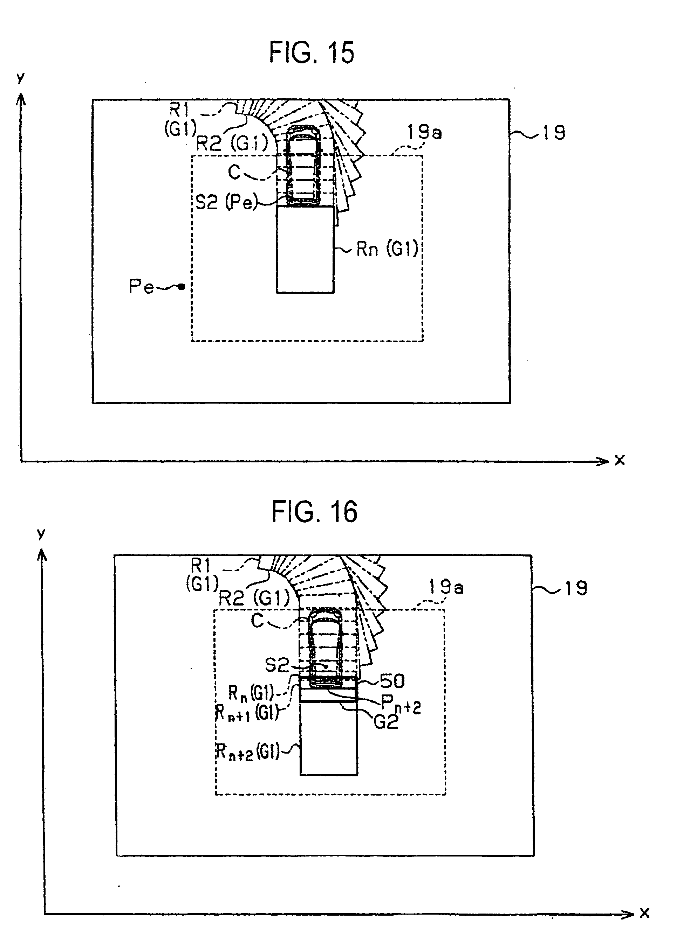

Referring to FIG. 14, if the pixel coordinates corresponding to the position of the vehicle C reach an out-of-range capture position Pe that is outside the predetermined range 19a (YES at step S2-13), then the image processor 20 updates the set reference position S I (step S2-14). At this time, as FIG. 15 illustrates, the image processor 20 performs rotation processing or shift processing for the out-of-range capture position Pe, which is among an overhead coordinate system (x, y) but outside the predetermined range 19a, so that it becomes aligned with the pixel coordinates thus far set as the reference position S1. Accordingly, a new reference position S2 is set. In conjunction with such processing, similar rotation processing or shift processing is performed for the pixel values of the recorded image data G1 thus far written into the synthesis memory area 19, as illustrated in FIG. 15 (step S2-15). For example, when the vehicle C is turning, known rotation processing is performed based on a turning angle or the like thereof.

Subsequently, the control unit 10 judges whether the end trigger has been input (step S2-16). If the end trigger has been input (YES at step S2-16), then the processing is ended. If the end trigger has not been input (NO at step S2-16), then the procedure returns to step S2-1.

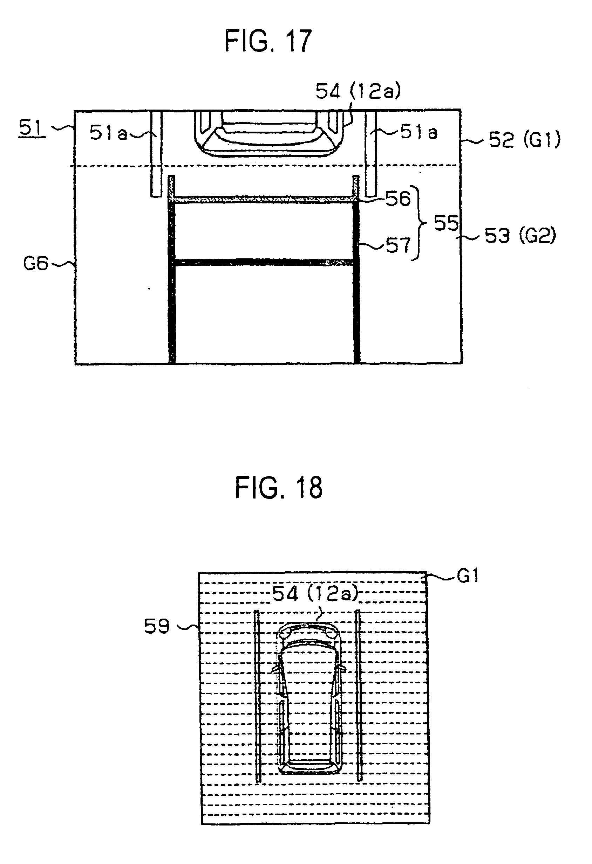

The above processing is repeated again (steps S2-1 to S2-11). After a new reference position S2 has been set, that position is written into the recorded image data G1 as a reference. Thus, as FIG. 16 illustrates, the reference position S2 is used as a reference to write the pixel values of the recorded image data G1 into pixel areas Rₙ₊₁, Rₙ₊₂ which correspond to the imaging range Z of the camera 35 at each time point. At step S2-12, the image processor 20 reads out the trimming range 50 from among the recorded image data G1, and shows the parking assist image 51 as illustrated in FIG 17. At this time, a good image quality is achieved for the parking assist image 51 by reducing the number of times rotation processing is performed when accumulating the recorded image data G1. As an example, the white lines 51a indicated in the parking assist image 51 are smooth white lines instead of jagged white lines.

Following input of the end trigger at step S2-16 (YES at step S2-12), the processing is ended. Furthermore, separate from the processing to depict the parking assist image 51 as the vehicle C backs up the predetermined distance D1, the image processor 20 also measures an elapsed time using a timer (not shown) or the like when the vehicle stops while the vehicle C is backing up. If a predetermined time set in the range of several seconds to several tens of seconds elapses, then a general overhead view 59 illustrated in FIG. 18 is shown on the display 22. At this time the image processor 20 extracts the recorded image data G1 in a predetermined range from the synthesis memory area 19, and shows it on the display 22. The image processor 20 also outputs the vehicle image data 12a and depicts the vehicle image 54. The general overhead view 59 uses more recorded image data G1 than the parking assist image 51. However, the parking assist image 51 can be shown with good image quality, due to suppression of the number of times rotation processing is repeated when accumulating the recorded image data G1 in the image memory 17.

According to the above embodiment, effects such as the following can be obtained.
(1) In the above embodiment, the image processor 20 of the parking assist unit 2 stores the respective recorded image data G1 taken during backing up of the vehicle C in the synthesis memory area 19. At such times, the reference position S 1 is set in advance. In addition, rotation processing is performed to bring the recorded image data G1 in line with the reference position S1, and stored in the corresponding pixel area. Also, the recorded image data G1 stored in the synthesis memory area 19 and the most current image data G4 are used to generated the synthesized data G6. The parking assist image 51 is then output to the display 22 based on the synthesized data G6. Therefore, the number of times rotation processing is performed until output of the parking assist image 51 can be kept to a minimum of two or three times. Consequently, a decrease in image quality due to rotation processing can be suppressed.
(2) In the above embodiment, a new reference position is set if the pixel coordinates corresponding to the current position of the vehicle C fall outside the synthesis memory area 19. Therefore, the limited memory area can be effectively utilized.
(3) In the above embodiment, when a new reference position S2 is set, the image processor 20 performed rotation processing or shift processing for the recorded image data G1 thus far accumulated. Therefore, the recorded image data G1 already accumulated can be utilized instead of being discarded.
(4) In the above embodiment, when generating the synthesized data G6, the image processor 20 performs rotation processing to align the trimmed data G2, which is a result of trimming the recorded image data G1, with the current steering angle data 44. Therefore, the forward travel direction (backing up direction) of the vehicle C can be shown as constantly in line with the vertical direction (direction x1) of the screen. Consequently, it is possible to show an image that the driver can directly understand with ease.
(5) In the above embodiment, the image data G1 input is converted into an overhead view so as to generate the recorded image data G1. Therefore, an overhead image that surveys the vehicle surroundings can be achieved for the parking assist image 51.

Note that the present embodiment may be modified as follows.
- The image memory area 18 and the synthesis memory area 19, which acts as the image data storing means, are provided in the same image memory 17. However, these may be provided in separate memories.
- In the above embodiment, the steering angle data 44 is associated with the recorded image data G1. However, an absolute orientation or relative orientation may also be used.
- In the above embodiment, subsequent to showing the parking assist image 51 the general overhead image 59 is shown. However, showing the general overhead image 59 is not required.
- In the above embodiment, the guide line 55 is formed from the target line 56, the vehicle width extended line 57, and the estimated trajectory line 58. However, the guide line 55 may be formed from any single one of these. Other guide lines may also be shown. Alternatively, the guide line 55 need not be depicted on the parking assist image 51.
- In the above embodiment, a condition for updating the reference position is designated as the pixel coordinates corresponding to one's own vehicle position falling outside the synthesis memory area 19. However, the reference position may be changed when a cumulative backing up distance of the vehicle C from the reference position S1 is a predetermined distance.
- In the above embodiment, when a new reference position S2 is set, rotation processing or shift processing is performed for the recorded image data G1 thus far accumulated. However, when the reference position S2 is newly set, the recorded image data G1 thus far accumulated may be discarded. Alternatively, a portion of the recorded image data G1 accumulated may be stored in another memory area.
- In the above embodiment, a plurality of recorded image data G1 and the current image data G4 subject to overhead view conversion are joined in a continuous manner to generate the synthesized data G6. However, an image other than an overhead image may be shown, and other synthesis methods may be used such as generating the synthesized data G6 with the viewpoint set near the driver's seat or the rear wheel axle.
- In the above embodiment, the recorded image data G1 is generated per predetermined distance. However, the recorded image data G1 may be generated per predetermined time and then accumulated in the image memory 17. In this case as well, the recorded image data G1 is stored in a corresponding area among the synthesis memory area 19.
- In the above embodiment, the image processor 20 performs a geometric conversion (rotation processing and shift processing) as image processing. However, other image processing may be performed. For example, contrast adjusting or the like may be performed using the recorded image data G1 taken at the reference position S1 as a reference to correct the color of subsequent recorded image data G1. In such case, the number of times image processing is performed for the newly inputted respective image data can be reduced. Therefore, it is also possible to lessen the image processing load, in addition to suppressing lowered image quality.
- In the above embodiment, rotation processing and shift processing are specified as geometric conversions performed by the image processor 20. However, other conversion processing may be performed.
- In the above embodiment, the camera 35 is installed on the rear end CB of the vehicle C. However, the camera 35 may be installed on another portion such as a front end or a side end. In such cases, the parking assist image may be shown at times other than when the vehicle C is backing up. Furthermore, the camera 35 may show an image to assist with driving operations other than parking may be shown. A plurality of cameras may also be installed on the vehicle C and used to generate the parking assist image.

## Claims

1. A driving support method for supporting a driving operation of a vehicle (C), wherein
image data (G) is input from an imaging device (35) provided in the vehicle (C), converting the image data (G) into an overhead view to generate recorded data (61). wherein the recorded data serving as a reference is stored in an image data storing means (17);
image processing is performed for newly input image data based on relative data related to the recorded data serving as a reference and the newly input image data, and new recorded data is generated; and
the recorded data subjected to image processing is used to generate driving support image data, and such driving support image data is output to a display means (22).

2. A driving support device mounted in a vehicle (C), comprising:
a position detecting means (10) for detecting a position of the vehicle (C);
a reference position setting means (20) for setting a reference position of the vehicle (C);
an image data input means (16) for inputting image data from an imaging device (35) provided in the vehicle (C);
a first image processing means (20) for performing an overhead view conversion with respect to the respective image data, based on a relative position with respect to the reference position of the vehicle (C) during imaging, and for generating recorded data;
an image data storing means (17) for storing the recorded data in a corresponding area among a synthesis memory area;
a second image processing means (20) for generating driving support image data using the respective recorded data; and
an output control means (20) for outputting the driving support image data to a display means (22).

3. The driving support device according to claim 2, wherein
the first image processing means (20) performs rotation processing on the respective image data based on a relative position with respect to the reference position of the vehicle (C).

4. The driving support device according to claim 2 or 3, wherein
the reference position setting means (20) sets a new reference position if a relative position with respect to the reference position falls outside a predetermined range.

5. The driving support device according to claim 2 or 3, wherein
the reference position setting means (20) sets a new reference position if the vehicle (C) moves a predetermined distance from the reference position.

6. The driving support device according to claim 4 or 5, wherein
the first image processing means (20) performs a geometric conversion for the recorded data accumulated, if the reference position setting means (20) sets a new reference position, to align the recorded data with the newly set reference position.

7. The driving support device according to any one of claims 2 to 6, wherein
the second image processing means (20) performs rotation processing for the recorded data when the driving support image data is generated, in order to align the recorded data with the position of the vehicle (C) at such time.

8. The driving support device according to any one of claims 2 to 7, further comprising:
a third image processing means (20) for generating the recorded data, wherein the image data inputted is converted into an overhead view.

## Patentansprüche

1. Fahrunterstützungsverfahren zur Unterstützung eines Fahrbetriebs eines Fahrzeugs (C), wobei
Bilddaten (G) von einer im Fahrzeug (C) vorgesehenen Abbildungsvorrichtung (33) eingegeben werden, die Bilddaten (G) in eine Overheaddarstellung umgewandelt werden, um aufgezeichnete Daten (G1) zu erzeugen, wobei die aufgezeichneten Daten, die als eine Referenz dienen, in einer Bilddatenspeichereinrichtung (17) gespeichert werden;
eine Bildverarbeitung für neu eingegebene Bilddaten beruhend auf relativen Daten durchgeführt wird, die sich auf die aufgezeichneten Daten, die als eine Referenz dienen, und die neu eingegebenen Bilddaten beziehen, und neue aufgezeichnete Daten erzeugt werden; und
die einer Bildverarbeitung unterzogenen aufgezeichneten Daten verwendet werden, um Fahrunterstützungsbilddaten zu erzeugen, und solche Fahrunterstützungsbilddaten an eine Anzeigeeinrichtung (22) ausgegeben werden.

2. Fahrunterstützungsvorrichtung, die in einem Fahrzeug (C) eingebaut ist, die aufweist:
eine Positionsermittlungseinrichtung (10) zum Ermitteln einer Position des Fahrzeugs (C);
eine Referenzpositionseinstelleinrichtung (20) zum Einstellen einer Referenzposition des Fahrzeugs (C);
eine Bilddateneingabeeinrichtung (16) zur Eingabe von Bilddaten von einer im Fahrzeug (C) vorgesehenen Abbildungsvorrichtung (35);
eine erste Bildverarbeitungseinrichtung (20) zur Durchführung einer Overheaddarstellungsumwandlung bezüglich der jeweiligen Bilddaten, beruhend auf einer relativen Position bezüglich der Referenzposition des Fahrzeugs (C) während der Abbildung, und zum Erzeugen aufgezeichneter Daten;
eine Bilddatenspeichereinrichtung (17) zum Speichern der aufgezeichneten Daten in einem entsprechenden Bereich innerhalb eines Synthesespeicherbereichs;
eine zweite Bildverarbeitungseinrichtung (20) zum Erzeugen von Fahrunterstützungsbilddaten mittels der jeweiligen aufgezeichneten Daten; und
eine Ausgabesteuereinrichtung (20) zur Ausgabe der Fahrunterstützungsbilddaten an eine Anzeigeeinrichtung (22).

3. Fahrunterstützungsvorrichtung nach Anspruch 2, wobei die erste Bildverarbeitungseinrichtung (20) eine Rotationsverarbeitung an den jeweiligen Bilddaten beruhend auf einer relativen Position bezüglich der Referenzposition des Fahrzeugs (C) durchführt.

4. Fahrunterstützungsvorrichtung nach Anspruch 2 oder 3, wobei die Referenzpositionseinstelleinrichtung (20) eine neue Referenzposition einstellt, wenn eine relative Position bezüglich der Referenzposition außerhalb eines vorgegebenen Bereichs fällt.

5. Fahrunterstützungsvorrichtung nach Anspruch 2 oder 3, wobei die Referenzpositionseinstelleinrichtung (20) eine neue Referenzposition einstellt, wenn sich das Fahrzeug (C) um eine vorgegebene Strecke von der Referenzposition bewegt.

6. Fahrunterstützungsvorrichtung nach Anspruch 4 oder 5, wobei die erste Bildverarbeitungseinrichtung (20) eine geometrische Umwandlung für die angesammelten aufgezeichneten Daten durchführt, wenn die Referenzpositionseinstelleinrichtung (20) eine neue Referenzposition einstellt, um die aufgezeichneten Daten mit der neu eingestellten Referenzposition abzugleichen.

7. Fahrunterstützungsvorrichtung nach einem der Ansprüche 2 bis 6, wobei
die zweite Bildverarbeitungseinrichtung (20) eine Rotationsverarbeitung für die aufgezeichneten Daten durchführt, wenn die Fahrunterstützungsbilddaten erzeugt werden, um die aufgezeichneten Daten mit der Position des Fahrzeugs (C) zu einem solchen Zeitpunkt abzugleichen.

8. Fahrunterstützungsvorrichtung nach einem der Ansprüche 2 bis 7, ferner mit einer dritten Bildverarbeitungseinrichtung (20) zum Erzeugen der aufgezeichneten Daten, wobei die eingegebenen Bilddaten in eine Overheaddarstellung umgewandelt werden.

## Revendications

1. Procédé d'assistance à la conduite destiné à assister une manoeuvre de conduite d'un véhicule (C), où
des données d'image (G) sont saisies depuis un dispositif d'imagerie (35) prévu sur le véhicule (C), lesdites données d'image (G) étant converties en une vue aérienne pour générer des données enregistrées (G1), les données enregistrées servant de référence étant archivées dans un moyen de stockage (17) de données d'image ;
un traitement d'image est exécuté pour des données d'image nouvellement saisies, sur la base de données relatives par rapport aux données enregistrées servant de référence et aux données d'image nouvellement saisies, et de nouvelles données enregistrées sont générées ; et
les données enregistrées soumises au traitement d'image sont exploitées pour générer des données d'image d'assistance à la conduite, et lesdites données d'image d'assistance à la conduite sont sorties vers un moyen d'affichage (22).

2. Dispositif d'assistance à la conduite monté sur un véhicule (C), comprenant :
un moyen de détection de position (10) destiné à détecter une position du véhicule (C) ;
un moyen de fixation de position de référence (20) destiné à fixer une position de référence du véhicule (C) ;
un moyen de saisie de données d'image (16) destiné à saisir des données d'image depuis un dispositif d'imagerie (35) prévu sur le véhicule (C) ;
un premier moyen de traitement d'image (20) destiné à exécuter une conversion en vue aérienne par rapport aux données d'image correspondantes, sur la base d'une position relative par rapport à la position de référence du véhicule (C) pendant la formation d'image, et à générer des données enregistrées ;
un moyen de stockage (17) de données d'image destiné à archiver les données enregistrées dans un secteur correspondant dans une zone de mémoire de synthèse ;
un deuxième moyen de traitement d'image (20) destiné à générer des données d'image d'assistance à la conduite en exploitant les données enregistrées correspondantes ; et
un moyen de commande de sortie (20) destiné à sortir les données d'image d'assistance à la conduite vers un moyen d'affichage (22).

3. Dispositif d'assistance à la conduite selon la revendication 2, où
le premier moyen de traitement d'image (20) fait subir une rotation aux données d'image correspondantes sur la base d'une position relative par rapport à la position de référence du véhicule (C).

4. Dispositif d'assistance à la conduite selon la revendication 2 ou la revendication 3, où
le moyen de fixation de position de référence (20) fixe une nouvelle position de référence si une position relative par rapport à la position de référence n'est plus comprise dans une plage définie.

5. Dispositif d'assistance à la conduite selon la revendication 2 ou la revendication 3, où
le moyen de fixation de position de référence (20) fixe une nouvelle position de référence si le véhicule (C) se déplace d'une distance définie de la position de référence.

6. Dispositif d'assistance à la conduite selon la revendication 4 ou la revendication 5, où
le premier moyen de traitement d'image (20) exécute une conversion géométrique pour les données enregistrées accumulées si le moyen de fixation de position de référence (20) fixe une nouvelle position de référence, pour aligner les données enregistrées sur la position de référence nouvellement fixée.

7. Dispositif d'assistance à la conduite selon l'une des revendications 2 à 6, où
le deuxième moyen de traitement d'image (20) exécute une rotation pour les données enregistrées lorsque les données d'image d'assistance à la conduite sont générées, pour aligner les données enregistrées sur la position du véhicule (C) à ce moment.

8. Dispositif d'assistance à la conduite selon l'une des revendications 2 à 7, comprenant en outre : un troisième moyen de traitement d'image (20) destiné à générer les données enregistrées, les données d'image saisies étant converties en une vue aérienne.
